# EUROPEAN PATENT APPLICATION

(11) **EP 4 834 498 A1**
(43) Date of publication of application: **04.11.2026**
(21) Application number: 23963031.2
(22) Date of filing: 26.12.2023
(51) Int. Cl.: B09B 3/40, B09B 3/30, B09B 101/15

(54) **CONTINUOUS HEATING DEVICE, AND RECOVERY SYSTEM OF CONSTITUENT MEMBER OF SOLAR CELL PANEL**

(71) Applicant: Shinryo Corporation, Kitakyushu-shi, Fukuoka 806-0021 (JP)
(72) Inventor: MORIYA, Daisuke, Kitakyushu-shi, Fukuoka 806-0021 (JP); MATSUOKA, Daisuke, Kitakyushu-shi, Fukuoka 806-0021 (JP); FUKUDA, Masato, Kitakyushu-shi, Fukuoka 806-0021 (JP); SATO, Yuuki, Kitakyushu-shi, Fukuoka 806-0021 (JP); KOSHIJI, Teruhiko, Kitakyushu-shi, Fukuoka 806-0021 (JP)
(74) Representative: Hoffmann Eitle
(86) International application number: PCT/JP2023/046577
(87) International publication number: WO 2025/141675

(57) **Abstract**

The present invention provides: a continuous heating device that improves thermal efficiency in a heat treatment of a solar cell panel, reduces energy costs, and improves quality of valuable materials recovered from the solar cell panel; and a recovery system for a constituent member of a solar cell panel including the continuous heating device. A continuous heating device (100) includes a heating furnace (20), in which the heating furnace (20) includes a primary treatment section (13) that performs a heat treatment on a solar cell panel (1) in a non-oxidizing atmosphere while conveying the solar cell panel (1) with an endless belt (21) to obtain a primary treated material (2) and a secondary treatment section (15) that performs a heat treatment on the primary treated material (2) in an oxidizing atmosphere while conveying the primary treated material (2) with the endless belt (21) to obtain a heat-treated material (3), and at least one of the primary treatment section (13) and the secondary treatment section (15) uses thermal energy generated by combustion of a pyrolysis gas generated when an encapsulant of the solar cell panel (1) is heat-treated and decomposed in the primary treatment section (13).

## Description

### TECHNICAL FIELD

The present invention relates to a continuous heating device and a recovery system for a constituent member of a solar cell panel.

### BACKGROUND ART

For effective utilization of resources, recovery of cells and glass from used solar cell panels has been studied. Since an increase in the amount of solar cell panels to be discarded is predicted, the importance of reuse of constituent members of the solar cell panels is growing. For example, by removing an aluminum frame of the solar cell panel, an aluminum plate can be recovered. In addition, by removing a resin such as an adhesive or an encapsulant from the solar cell panel, glass, copper wires, and silicon cells can be recovered.

As a method for removing a resin such as an encapsulant from a solar cell panel, there are a wet treatment method in which a resin is decomposed or separated using a treatment liquid and a treatment method in which a resin is vaporized by a heat treatment. From the viewpoint of continuous treatment, a heat treatment is preferable. For example, Patent Document 1 discloses that, after a solar cell panel is heat-treated, a glass material and a metal-containing material are sorted and recovered from a heat-treated material. In Examples of Patent Document 1, an organic compound of the solar cell panel is decomposed by performing primary firing in a nitrogen atmosphere and then performing secondary firing in air.

### Citation List

### Patent Document

Patent Document 1: Japanese Unexamined Patent Application, First Publication No. 2023-89446

### SUMMARY OF INVENTION

### Technical Problem

However, in a heating furnace used in Examples of Patent Document 1, the solar cell panel is subjected to the primary firing in a nitrogen atmosphere, and then a heat-treated material is cooled once before the secondary firing. Therefore, it is necessary to heat the treated material obtained by the primary firing again for the secondary firing. As a result, there is a problem in that thermal efficiency in the heat treatment of the solar cell panel is poor, leading to high energy costs. In addition, since soot derived from a resin residue may adhere to the heat-treated material, there is also a concern that quality of valuable materials recovered in a sorting process after the heat treatment may vary.

The present invention provides a continuous heating device in which thermal efficiency in a heat treatment of a solar cell panel is improved, energy costs can be reduced, and quality of the valuable materials recovered from the solar cell panel is also improved; and a recovery system for a constituent member of a solar cell panel including the continuous heating device.

### Solution to Problem

The present invention has the following aspects.
[1] A continuous heating device including: a heating furnace configured to perform a heat treatment on a solar cell panel while conveying the solar cell panel with an endless belt to obtain a heat-treated material, in which the heating furnace includes a primary treatment section configured to perform a heat treatment on the solar cell panel in a non-oxidizing atmosphere while conveying the solar cell panel with the endless belt to obtain a primary treated material, and a secondary treatment section configured to perform a heat treatment on the primary treated material in an oxidizing atmosphere while conveying the primary treated material with the endless belt to obtain the heat-treated material, and at least one of the primary treatment section and the secondary treatment section uses thermal energy generated by combustion of a pyrolysis gas generated when an encapsulant of the solar cell panel is heat-treated and decomposed in the primary treatment section.
[2] The continuous heating device according to [1], in which a flexible seal curtain that extends across a conveyance direction of the solar cell panel and that is in contact with the endless belt is suspended at at least one or more locations in the heating furnace.
[3] The continuous heating device according to [2], in which the seal curtain is suspended in the heating furnace between the primary treatment section and the secondary treatment section.
[4] The continuous heating device according to [2] or [3], in which the seal curtain is suspended in the heating furnace upstream of the primary treatment section.
[5] The continuous heating device according to any one of [2] to [4], in which the seal curtain is suspended in the heating furnace downstream of the secondary treatment section.
[6] The continuous heating device according to any one of [1] to [5], in which at least one of the primary treatment section and the secondary treatment section uses thermal energy of an exhaust gas generated after the combustion of the pyrolysis gas.
[7] The continuous heating device according to any one of [1] to [6], further including: a combustion chamber configured to combust the pyrolysis gas generated when the encapsulant of the solar cell panel is heat-treated and decomposed in the primary treatment section.
[8] The continuous heating device according to [7], in which at least one of the primary treatment section and the secondary treatment section uses thermal energy of an exhaust gas discharged from the combustion chamber.
[9] The continuous heating device according to any one of [1] to [8], in which a heat exchanger configured to use the thermal energy generated by the combustion of the pyrolysis gas is disposed in at least one of the primary treatment section and the secondary treatment section.
[10] The continuous heating device according to [9], in which the heat exchanger uses thermal energy of an exhaust gas generated after the combustion of the pyrolysis gas.
[11] The continuous heating device according to [9] or [10], in which the heating furnace includes a muffle surrounding the endless belt to cover the endless belt, and an outer wall surrounding the muffle to cover the muffle, and the heat exchanger is disposed in a space between the muffle and the outer wall.
[12] The continuous heating device according to any one of [9] to [11], in which the heat exchanger is an indirect heat exchanger.
[13] The continuous heating device according to [11] or [12], in which an electric heater is disposed in the space between the muffle and the outer wall.
[14] The continuous heating device according to any one of [1] to [13], in which an amount of soot adhering to the heat-treated material is 100 ppm or less.
[15] A recovery system for a constituent member of a solar cell panel, the recovery system including: the continuous heating device according to any one of [1] to [14]; and a sorting device configured to sort a glass material and a valuable metal-containing material from the heat-treated material.
[16] The recovery system for a constituent member of a solar cell panel according to [15], in which the sorting device includes a screening processing unit configured to screen the heat-treated material into a first valuable metal-containing material containing a cell and a copper wire, and a first glass material.
[17] The recovery system for a constituent member of a solar cell panel according to [16], in which the sorting device further includes an air sorting unit configured to sort, by air sorting, the first glass material screened by the screening processing unit into a second valuable metal-containing material containing a cell, and a second glass material.
[18] The recovery system for a constituent member of a solar cell panel according to [17], further including: an air table sorting unit configured to sort a third glass material from the second glass material using an air table.
[19] The recovery system for a constituent member of a solar cell panel according to [18], in which a glass purity of the third glass material after sorting is 99.99% or more.
[20] The recovery system for a constituent member of a solar cell panel according to any one of [15] to [19], in which a recycling rate of the glass material contained in the heat-treated material is 85% or more.
[21] The recovery system for a constituent member of a solar cell panel according to any one of [15] to [20], in which a recycling rate of a cell contained in the heat-treated material is 90% or more.
[22] The recovery system for a constituent member of a solar cell panel according to any one of [15] to [21], in which a recycling rate of a copper wire contained in the heat-treated material is 90% or more.

### Advantageous Effects of Invention

According to the present invention, thermal efficiency in a heat treatment of a solar cell panel is improved, energy cost can be reduced, and quality of valuable materials recovered from the solar cell panel is also improved.

### BRIEF DESCRIPTION OF DRAWINGS

[FIG. 1] A schematic configuration diagram showing an example of a continuous heating device.
[FIG. 2] A schematic configuration diagram showing the continuous heating device of FIG. 1 as seen from an entrance side.
[FIG. 3] A partially enlarged perspective view of the continuous heating device of FIG. 1.
[FIG. 4] A diagram showing a seal curtain as seen from a conveyance direction of a solar cell panel.
[FIG. 5] A diagram showing a state in which the solar cell panel is conveyed while pushing up the seal curtain in a seal chamber of a heating furnace as seen from a side.
[FIG. 6] A diagram showing a state in which the solar cell panel is conveyed while pushing up the seal curtain in the seal chamber of the heating furnace as seen from a rear side in the conveyance direction of the solar cell panel.
[FIG. 7] A diagram showing a state in which the solar cell panel is conveyed while pushing up the seal curtain in the seal chamber of the heating furnace as seen from a rear side in the conveyance direction of the solar cell panel.
[FIG. 8] A schematic diagram showing an example of a recovery system for a constituent member of a solar cell panel.
[FIG. 9] A schematic diagram showing another example of the recovery system for a constituent member of a solar cell panel.
[FIG. 10] A view of a glass fragment recovered from a heat-treated material obtained in Example 1.
[FIG. 11] A view of a glass fragment recovered from a heat-treated material obtained in Comparative Example 1.

### DESCRIPTION OF EMBODIMENTS

### [Terms]

A "non-oxidizing atmosphere" refers to an atmosphere containing no oxygen gas or an atmosphere substantially containing no oxygen gas.

An "oxidizing atmosphere" refers to an atmosphere containing oxygen gas, and refers to an atmosphere other than a non-oxidizing atmosphere.

In the present specification and the claims, a numerical range indicated by "to" means that numerical values described before and after "to" are included as a lower limit and an upper limit.

### [Solar Cell Panel]

**In** one example, a solar cell panel includes a cell, a glass substrate, and an encapsulant. **In** another example, the solar cell panel may further include a wiring electrode, a lead-out electrode, a terminal box, a cable, a back sheet, a frame, and the like.

It is preferable to perform a heat treatment on the solar cell panel from which the cable is removed.

From the viewpoint of reducing the number of steps involved, it is preferable to perform the heat treatment without removing the back sheet, the terminal box, and the aluminum frame from the solar cell panel.

Examples of the cell of the solar cell panel include a silicon-based cell (a monocrystalline silicon-based cell, a polycrystalline silicon-based cell, an amorphous silicon-based cell, and the like) and a compound-based cell (a GaAs-based cell, a CIS-based cell, and a CdTe-CdS-based cell). The monocrystalline silicon-based cell or the polycrystalline silicon-based cell is preferable.

Examples of the glass substrate of the solar cell panel include soda-lime glass and alkali-free glass.

Examples of the encapsulant of the solar cell panel include an ethylene-vinyl acetate copolymer (EVA) and an ethylene-(meth)acrylic acid ester copolymer. Among these, EVA is widely used.

### [Pyrolysis Gas]

A pyrolysis gas is generated when the encapsulant of the solar cell panel is thermally decomposed. The pyrolysis gas is a gas generated by thermal decomposition of a resin such as the encapsulant when the encapsulant of the solar cell panel is thermally decomposed. In a solar cell panel, organic compounds such as various resins and polymers are mainly used as the encapsulant. Examples of constituent elements of these organic compounds include carbon, nitrogen, fluorine, hydrogen, and oxygen. The pyrolysis gas is generated when these organic compounds are decomposed by heating and vaporized.

In a primary treatment, the resin is gasified and carbonized by a heat treatment in a non-oxidizing atmosphere. Then, in a secondary treatment, carbides adhering to a heat-treated material after the primary treatment can be oxidized and removed by a heat treatment in an oxidizing atmosphere. A pyrolysis gas generated in the primary treatment contains a larger amount of combustible gas than an oxidized gas such as CO₂ generated in the secondary treatment. A continuous heating device according to the present invention is characterized in that, in order to improve thermal efficiency in the heat treatment and to reduce energy cost, thermal energy generated by combustion of the pyrolysis gas generated in the primary treatment containing a larger amount of combustible gas is used.

Hereinafter, some embodiments will be described with reference to the drawings as appropriate. The following description relates to representative examples of the embodiments of the invention, and the present invention is not limited to the following description. In addition, dimensional ratios in each drawing may differ from actual dimensional ratios for convenience of description.

### [Continuous Heating Device]

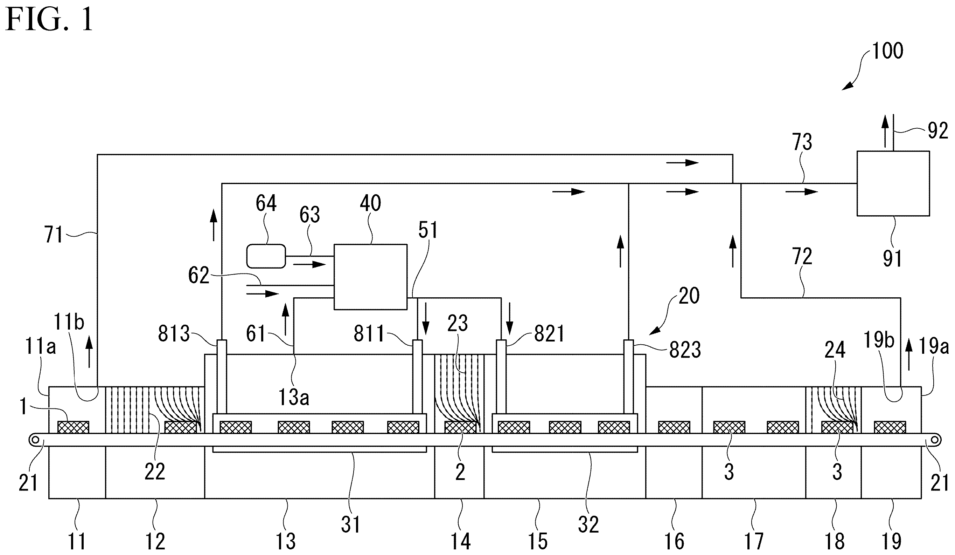

FIG. 1 is a schematic configuration diagram showing an example of the continuous heating device. A continuous heating device 100 includes: a heating furnace 20 that performs a heat treatment on a solar cell panel 1 while conveying the solar cell panel 1 with an endless belt 21 to obtain a heat-treated material; a combustion chamber 40 for burning a pyrolysis gas generated when an encapsulant of the solar cell panel 1 is heat-treated and decomposed in a primary treatment section 13 of the heating furnace 20; first gas supply means (not shown) for supplying an inert gas into the heating furnace 20; and second gas supply means (not shown) for supplying an oxygen-containing gas into the heating furnace 20.

The heating furnace 20 includes, in order from an upstream side to a downstream side, an entrance-side exhaust chamber 11, an entrance-side seal chamber 12, the primary treatment section 13, a switching section 14, a secondary treatment section 15, an air-cooling chamber 16, a cooling chamber 17, an exit-side seal chamber 18, and an exit-side exhaust chamber 19.

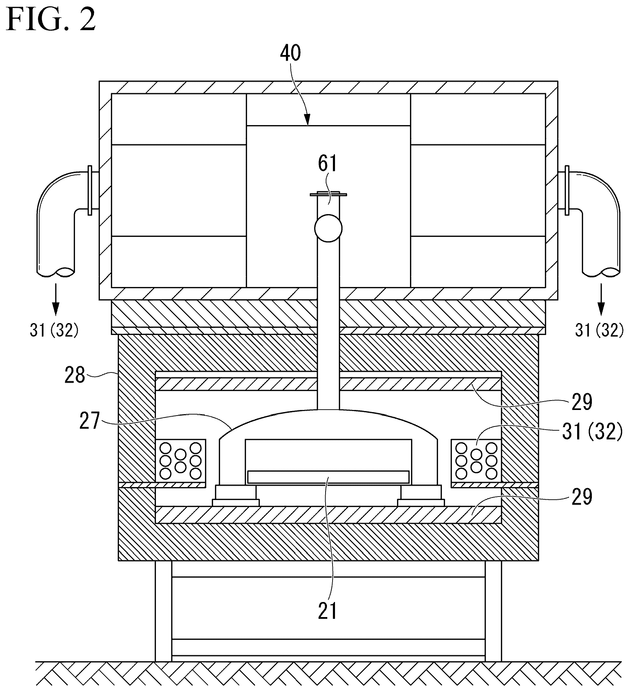

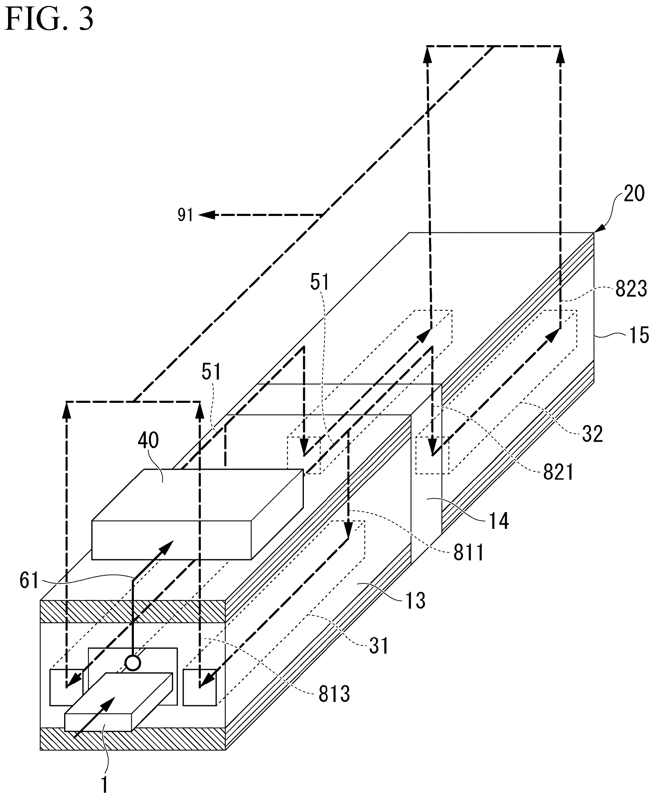

FIG. 2 is a schematic diagram when the continuous heating device 100 of FIG. 1 is viewed from an entrance 11a side. FIG. 3 is a partially enlarged perspective view of the continuous heating device 100. As shown in FIG. 2, the heating furnace 20 includes a muffle 27 that surrounds the endless belt 21 to cover the endless belt 21, and an outer wall 28 that surrounds the muffle 27 to cover the muffle 27. Although not shown in FIG. 3, the muffle 27 and the outer wall 28 each have a structure extending in a conveyance direction by the endless belt 21.

The primary treatment section 13, the switching section 14, and the secondary treatment section 15 are each formed in the muffle 27.

The outer wall 28 covers the muffle 27, a pair of electric heaters 29, a first heat exchanger 31, a second heat exchanger 32, and the like. With the outer wall 28, thermal fluctuation can be suppressed, and thus temperatures of the primary treatment section 13 and the secondary treatment section 15 can be maintained at appropriate heat treatment temperatures. The temperature can be adjusted by controlling an output of each of the electric heaters 29 according to the temperatures of the primary treatment section 13 and the secondary treatment section 15 in the muffle 27.

An entrance 11a for carrying the solar cell panel 1 into the heating furnace 20 is formed in the entrance-side exhaust chamber 11. The entrance-side exhaust chamber 11 is a region for exhausting outside air flowing in from the entrance 11a together with an inert gas and a pyrolysis gas from the entrance-side seal chamber 12.

In one example, the entrance 11a may be provided with an opening degree adjustment plate that adjusts an opening degree of a passage (entrance 11a) of the heating furnace 20.

An exhaust port 11b for exhausting outside air flowing in from the entrance 11a together with the inert gas and the pyrolysis gas from the entrance-side seal chamber 12 is formed in an upper portion of the entrance-side exhaust chamber 11. One end of an exhaust pipe 71 is connected to the exhaust port 11b.

In one example, the exhaust port 11b may be provided with opening degree adjustment means for adjusting an opening degree thereof. Examples of the opening degree adjustment means include an opening degree adjustment plate.

The entrance-side seal chamber 12 is a region for suppressing infiltration of the outside air into the primary treatment section 13 and leakage of the inert gas and the pyrolysis gas from the primary treatment section 13.

An inert gas introduction port (not shown) for introducing the inert gas supplied from first gas supply means (not shown) into the entrance-side seal chamber 12 is formed in an upper portion of the entrance-side seal chamber 12.

A flexible seal curtain 22 that extends across a conveyance direction of the solar cell panel 1 and that is in contact with the endless belt 21 is suspended in the entrance-side seal chamber 12. **In** one example, the entrance-side seal chamber 12 may be provided with an opening degree adjustment plate (not shown) that adjusts an opening degree of a passage (entrance of the entrance-side seal chamber 12) of the heating furnace 20 at a position upstream of the seal curtain 22.

A length of the seal curtain 22 in an up-down direction may be a length that allows the seal curtain 22 to contact the endless belt 21 in the heating furnace 20. It is preferable that a lower end of the seal curtain 22 is in contact with the endless belt 21, and it is more preferable that the lower end of the seal curtain 22 is pressed against the endless belt 21 and is bent.

The seal curtain 22 may have flexibility and heat resistance. Examples of the seal curtain 22 include a thin sheet. A thin heat-resistant sheet is preferable, and a thin metal sheet is more preferable.

A plurality of stages of the seal curtain 22 are suspended in the entrance-side seal chamber 12 at intervals in the conveyance direction of the solar cell panel 1. The number of stages of the seal curtain 22 is preferably 2 to 100, more preferably 10 to 85, and still more preferably 20 to 70. When the number of stages of the seal curtain 22 is equal to or greater than the lower limit of the above-described range, the infiltration of outside air into the primary treatment section 13 and the leakage of the inert gas and the pyrolysis gas from the primary treatment section 13 are sufficiently suppressed. When the number of stages of the seal curtain 22 is equal to or less than the upper limit of the above-described range, the solar cell panel 1 easily passes through the entrance-side seal chamber 12.

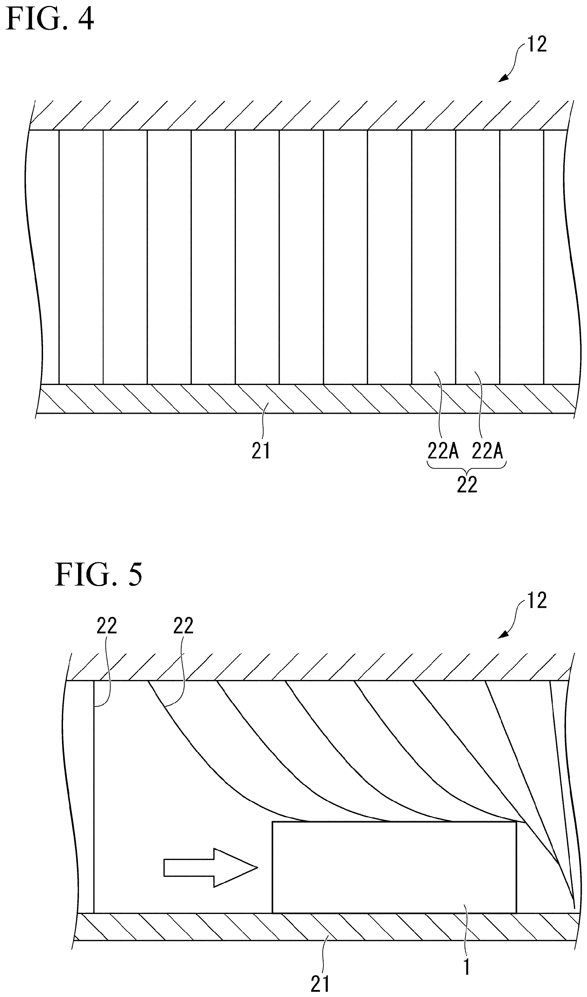

As shown in FIG. 4, the seal curtain 22 is formed of a plurality of strip members 22A extending in the up-down direction, which are arranged without gaps in a direction extending across the conveyance direction of the solar cell panel 1. The number of the strip members 22A per 1 m in a width direction of the seal curtain 22 is preferably 2 to 50 strips/m and more preferably 10 to 30 strips/m. When the number of the strip members 22A is equal to or greater than the lower limit of the above-described range, a gap between a side surface of the solar cell panel 1 and the strip member 22A can be minimized by a mechanism of action described later. Therefore, the infiltration of outside air into the primary treatment section 13 and the leakage of the inert gas and the pyrolysis gas from the primary treatment section 13 are sufficiently suppressed. When the number of the strip members 22A is equal to or less than the upper limit of the above-described range, the number of gaps between adjacent strip members 22A is suppressed. Therefore, the infiltration of outside air into the primary treatment section 13 and the leakage of the inert gas and the pyrolysis gas from the primary treatment section 13 are sufficiently suppressed.

The primary treatment section 13 is a region for obtaining a primary treated material by performing a heat treatment on the solar cell panel 1 in a non-oxidizing atmosphere while conveying the solar cell panel 1 with the endless belt 21. An inert gas introduction port (not shown) for introducing the inert gas supplied from the first gas supply means (not shown) into the primary treatment section 13 is formed in an upper portion of the primary treatment section 13.

As shown in FIG. 2, the pair of electric heaters 29 are installed in a space between the muffle 27 and the outer wall 28 in the conveyance direction by the endless belt 21. The pair of electric heaters 29 are installed in the primary treatment section 13 in the conveyance direction of the solar cell panel 1 with the muffle 27, in which the endless belt 21 for conveying the solar cell panel 1 is disposed, interposed therebetween.

In the primary treatment section 13, the solar cell panel 1 is heat-treated, whereby a portion of the resin contained in the solar cell panel 1 is thermally decomposed, and as a result, a primary treated material 2 is obtained.

An exhaust port 13a for exhausting, together with the inert gas, a pyrolysis gas generated by the thermal decomposition of the resin such as the encapsulant contained in the solar cell panel 1 from the primary treatment section 13 is formed in the upper portion of the primary treatment section 13. The pyrolysis gas generated here flows through a pyrolysis gas supply pipe 61 connected to the exhaust port 13a and is supplied to the combustion chamber 40.

The switching section 14 is a region for switching between the primary treatment in a non-oxidizing atmosphere and the secondary treatment in an oxidizing atmosphere. An inert gas introduction port (not shown) for introducing the inert gas supplied from the first gas supply means (not shown) into the switching section 14 is formed in an upper portion of the switching section 14.

In the heating furnace 20 of the switching section 14 located between the primary treatment section 13 and the secondary treatment section 15, a plurality of stages of a seal curtain 23 are suspended at intervals in the conveyance direction of the primary treated material 2.

The number of stages of the seal curtain 23 in the switching section 14 is preferably 2 to 50, more preferably 2 to 30, and still more preferably 5 to 20. When the number of stages of the seal curtain 23 is equal to or greater than the lower limit of the above-described range, the leakage of the pyrolysis gas and the inert gas from the primary treatment section 13 to the secondary treatment section 15, and the leakage of the oxidized gas and the oxygen-containing gas from the secondary treatment section 15 to the primary treatment section 13 are sufficiently suppressed. When the number of stages of the seal curtain 23 is equal to or less than the upper limit of the above-described range, the primary treated material 2 easily passes through the switching section 14.

The details and preferred aspects of the seal curtain 23 are the same as those of the seal curtain 22 in the entrance-side seal chamber 12.

The secondary treatment section 15 is a region for obtaining a heat-treated material 3 by performing a heat treatment on the primary treated material 2 in an oxidizing atmosphere while conveying the primary treated material 2 by the endless belt 21. An oxygen-containing gas introduction port (not shown) for introducing the oxygen-containing gas supplied from the second gas supply means (not shown) into the secondary treatment section 15 is formed in an upper portion of the secondary treatment section 15.

In the secondary treatment section 15, the pair of electric heaters 29 (FIG. 2) are installed in the conveyance direction of the solar cell panel 1 with the muffle 27, in which the endless belt 21 for conveying the primary treated material 2 is disposed, interposed therebetween.

In the secondary treatment section 15, the primary treated material 2 is heat-treated, whereby carbides of the resin such as the encapsulant remaining in the primary treated material 2 are oxidized. As a result, the heat-treated material 3 is obtained in the secondary treatment section 15.

An exhaust port (not shown) for exhausting, together with the oxygen-containing gas, an oxidized gas generated by the oxidation of the carbides of the resin such as the encapsulant remaining in the primary treated material 2 from the secondary treatment section 15 is formed in the upper portion of the secondary treatment section 15. The exhaust port is preferably formed near the switching section 14 from the viewpoint of preventing the leakage of the inert gas and the pyrolysis gas from the primary treatment section 13 to the secondary treatment section 15. The oxidized gas referred to here refers to, for example, carbon dioxide gas, water vapor, nitrogen oxides, sulfur oxides, and incomplete combustion products thereof, but is not limited thereto.

The air-cooling chamber 16 and the cooling chamber 17 are regions for cooling the heat-treated material 3. A cooling pipe (not shown) for flowing cooling water is disposed in the cooling chamber 17.

The exit-side seal chamber 18 is a region for suppressing the infiltration of outside air into the cooling chamber 17, the air-cooling chamber 16, and the secondary treatment section 15 and the leakage of the oxygen-containing gas and the oxidized gas from the secondary treatment section 15, the air-cooling chamber 16, and the cooling chamber 17.

An oxygen-containing gas introduction port (not shown) for introducing the oxygen-containing gas supplied from the second gas supply means (not shown) into the exit-side seal chamber 18 is formed in an upper portion of the exit-side seal chamber 18.

**In** the exit-side seal chamber 18, a plurality of stages of a flexible seal curtain 24 that extend across the conveyance direction of the heat-treated material 3 and are in contact with the endless belt 21 are suspended at intervals in the conveyance direction of the heat-treated material 3.

The number of stages of the seal curtain 24 in the exit-side seal chamber 18 is preferably 2 to 100, more preferably 10 to 60, and still more preferably 20 to 40.

When the number of stages of the seal curtain 24 is equal to or more than the lower limit of the above-described range, the infiltration of outside air into the cooling chamber 17 and the secondary treatment section 15 and the leakage of the oxygen-containing gas and the oxidized gas from the secondary treatment section 15 and the cooling chamber 17 are sufficiently suppressed. When the number of stages of the seal curtain 24 is equal to or less than the upper limit of the above-described range, the heat-treated material 3 easily passes through the exit-side seal chamber 18.

The details and preferred aspects of the seal curtain 24 are the same as those of the seal curtain 22 in the entrance-side seal chamber 12.

**In** one example, the exit-side seal chamber 18 may be provided with an opening degree adjustment plate for adjusting an opening degree of a passage (exit of the exit-side seal chamber 18) of the heating furnace 20 at a position downstream of the seal curtain 24.

An exit 19a for carrying out the heat-treated material 3 out of the heating furnace 20 is formed in the exit-side exhaust chamber 19. The exit-side exhaust chamber 19 is a region for exhausting the outside air flowing in from the exit 19a together with the oxygen-containing gas and the oxidized gas from the exit-side seal chamber 18.

In one example, the exit 19a may be provided with an opening degree adjustment plate for adjusting an opening degree of a passage (the exit 19a) of the heating furnace 20.

An exhaust port 19b for exhausting outside air flowing in from the exit 19a together with the oxygen-containing gas and the oxidized gas from the exit-side seal chamber 18 is formed in an upper portion of the exit-side exhaust chamber 19. One end of an exhaust pipe 72 is connected to the exhaust port 19b.

In one example, the exhaust port 19b may be provided with opening degree adjustment means for adjusting an opening degree thereof. Examples of the opening degree adjustment means include an opening degree adjustment plate.

The continuous heating device 100 includes the combustion chamber 40 for burning the pyrolysis gas generated when the resin of the solar cell panel 1 is heat-treated and decomposed in the primary treatment section 13. The pyrolysis gas supply pipe 61 for supplying the pyrolysis gas generated in the primary treatment section 13, an LPG supply pipe 63 for supplying LPG in an LPG tank 64, and an air supply pipe 62 for supplying air are each connected to the combustion chamber 40. In addition, an exhaust pipe 51 for discharging an exhaust gas generated when the pyrolysis gas is combusted in the combustion chamber 40 is connected to the combustion chamber 40. The exhaust pipe 51 is connected to each of a first reheating line 811 and a second reheating line 821.

In the combustion chamber 40, the pyrolysis gas supplied from the primary treatment section 13 through the pyrolysis gas supply pipe 61 is mixed with air and combusted. The exhaust gas generated after the pyrolysis gas generated in the primary treatment section 13 is combusted flows through the exhaust pipe 51, is discharged to the outside of the combustion chamber 40, and is then used for heating the primary treatment section 13 and the secondary treatment section 15.

The exhaust gas discharged from the combustion chamber 40 flows through each of the first reheating line 811 and the second reheating line 821. Since the exhaust gas discharged from the combustion chamber 40 is at a high temperature, thermal energy thereof can be used by the first heat exchanger 31 and the second heat exchanger 32 respectively connected to the first reheating line 811 and the second reheating line 821.

The first heat exchanger 31 and the second heat exchanger 32 each use thermal energy generated by the combustion of the pyrolysis gas generated when the encapsulant of the solar cell panel is heat-treated and decomposed in the primary treatment section 13. In the continuous heating device 100, the pyrolysis gas generated when the encapsulant of the solar cell panel is heat-treated and decomposed in the primary treatment section 13 is converted into a high-temperature exhaust gas generated by a combustion reaction in the combustion chamber 40. Therefore, the first heat exchanger 31 and the second heat exchanger 32 can each use the thermal energy of the exhaust gas generated after the pyrolysis gas is combusted.

The first heat exchanger 31 uses the thermal energy of the exhaust gas generated after the pyrolysis gas is combusted for heating the primary treatment section 13. In addition, the second heat exchanger 32 uses the thermal energy of the exhaust gas generated after the pyrolysis gas is combusted for heating the secondary treatment section 15.

Here, as shown in FIG. 2, the first heat exchanger 31 and the second heat exchanger 32 are installed in the space between the muffle 27 and the outer wall 28. In addition, as shown in FIGS. 1, 2, and 3, the heat exchanger 31 is disposed near the outer wall 28 of the primary treatment section 13 along the conveyance direction by the endless belt 21. In addition, the heat exchanger 32 is disposed near the outer wall 28 of the secondary treatment section 15 along the conveyance direction by the endless belt 21.

The heating of the primary treatment section 13 using the exhaust gas discharged from the combustion chamber 40 is performed as follows. As shown in FIGS. 1 and 3, the exhaust gas is supplied from the first reheating line 811 to the first heat exchanger 31. The first heat exchanger 31 uses the thermal energy of the exhaust gas supplied from the first reheating line 811 for heating the primary treatment section 13. The exhaust gas that has passed through the first heat exchanger 31 flows through an exhaust pipe 813 and an exhaust pipe 73 in this order, and is supplied to a scrubber 91.

The heating of the secondary treatment section 15 using the exhaust gas discharged from the combustion chamber 40 is performed as follows. As shown in FIGS. 1 and 3, the exhaust gas is supplied from the second reheating line 821 to the second heat exchanger 32. The second heat exchanger 32 uses the thermal energy of the exhaust gas supplied from the second reheating line 821 for heating the secondary treatment section 15. The exhaust gas that has passed through the second heat exchanger 32 flows through an exhaust pipe 823 and the exhaust pipe 73 in this order, and is supplied to the scrubber 91.

The first heat exchanger 31 and the second heat exchanger 32 are not particularly limited, but are preferably indirect heat exchangers from the viewpoint of being able to suppress corrosion on the outside of the muffle 27 and corrosion on the inside of the outer wall 28. The indirect heat exchanger is not particularly limited, and examples thereof include a multi-tube heat exchanger, a coil-type heat exchanger, and a heating wall.

The exhaust gas discharged from the combustion chamber 40 may contain fluorine gas, unburned gas, NOx, and the like, and in this case, there is a possibility that the exhaust gas is corrosive. In particular, depending on conditions such as the type of resin of the encapsulant of the solar cell panel, an airflow within the combustion chamber 40, and temperature, unexpected corrosive gases such as fluorine gas, unburned gas, and NOx may remain. When these corrosive gases are directly supplied to the space between the muffle 27 and the outer wall 28, a wall surface may be corroded. As a result, there is a need for complicated maintenance such as replacement and cleaning of the entire heating furnace.

Therefore, with the indirect heat exchanger, by causing two types of fluids having different temperatures to flow through spaces separated by a wall inside the indirect heat exchanger, heat can be transferred from the high-temperature fluid to the low-temperature fluid through heat transfer to the wall surface, heat conduction through the wall, and the wall surface itself. Therefore, the primary treatment section 13 and the secondary treatment section 15 can be heated by heat exchange without directly supplying the exhaust gas discharged from the combustion chamber 40 to the space between the muffle 27 and the outer wall 28. With the indirect heat exchanger, since the exhaust gas passes through the inside of the indirect heat exchanger, an influence of corrosive gases can be limited to the indirect heat exchanger itself. Even in a case where corrosion occurs, the indirect heat exchanger may be selectively replaced. In addition, corrosion of the outside of the muffle 27 and the inside of the outer wall 28, which constitute the heating furnace 20, can be prevented. As a result, with the indirect heat exchanger, maintenance is facilitated when the indirect heat exchanger is affected by the corrosive gases.

In the example shown in FIG. 1 and the like, the pyrolysis gas supply pipe 61 and the air supply pipe 62 independently supply the pyrolysis gas and air to the combustion chamber 40. In another example, however, the pyrolysis gas and the air may be mixed in advance and then the mixed gas may be supplied to the combustion chamber 40 in order to improve combustion efficiency and reduce the corrosive gases.

In a case where the pyrolysis gas and air are mixed in advance, for example, a parallel pipe for mixing the pyrolysis gas and air in advance may be used instead of the pyrolysis gas supply pipe 61 and the air supply pipe 62 shown in FIG. 1 and the like. The parallel pipe has a pyrolysis gas supply pipe and an air supply pipe, at least portions of which are disposed parallel to each other. The parallel pipe has an opening portion through which the pyrolysis gas and air flow internally, in a portion where the pyrolysis gas supply pipe and the air supply pipe are disposed parallel to each other. Therefore, after the pyrolysis gas and the air are mixed in advance, the mixed gas can be supplied to the combustion chamber 40.

A form of the parallel pipe is not particularly limited, and examples thereof include a double pipe in which the pyrolysis gas supply pipe and the air supply pipe are disposed concentrically and a square pipe in which the pyrolysis gas supply pipe and the air supply pipe are disposed adjacent to each other, but the form is not particularly limited.

The scrubber 91 is disposed downstream of the exhaust pipe 71, the exhaust pipe 72, the exhaust pipe 813, the exhaust pipe 823, and the exhaust pipe 73. The scrubber 91 is for removing harmful substances in a gas exhausted from each region in the continuous heating device 100 before the gas is discharged to the outside.

The first gas supply means (not shown) supplies the inert gas to each of the primary treatment section 13, the entrance-side seal chamber 12, and the switching section 14 in the heating furnace 20. Examples of a gas supply source of the first gas supply means include a membrane separation type nitrogen gas generator, an inert gas cylinder, and an inert gas tank. Examples of the inert gas include nitrogen gas, argon gas, helium gas, xenon gas, carbon dioxide gas, and superheated steam. From the viewpoint of economic efficiency, nitrogen gas is preferable.

The second gas supply means (not shown) supplies the oxygen-containing gas to each of the secondary treatment section 15 and the exit-side seal chamber 18 in the heating furnace 20. Examples of a gas supply source of the second gas supply means include an oxygen-containing gas cylinder and an oxygen-containing gas tank. Examples of the oxygen-containing gas include air and oxygen. From the viewpoint of economic efficiency, air is preferable.

### (Method for Producing Heat-Treated Material)

A method for producing the heat-treated material 3 using the continuous heating device 100 will be described.

First, an inert gas is constantly supplied to the entrance-side seal chamber 12 and the switching section 14. In addition, an oxygen-containing gas is constantly supplied to the exit-side seal chamber 18. A non-oxidizing atmosphere is prepared within the muffle in a portion of the primary treatment section 13 by continuously supplying the inert gas. An oxidizing atmosphere is prepared within the muffle in a portion of the secondary treatment section 15 by continuously supplying the oxygen-containing gas.

Examples of the inert gas supplied to the primary treatment section 13 include nitrogen gas, argon gas, helium gas, xenon gas, carbon dioxide gas, and superheated steam. From the viewpoint of economic efficiency, nitrogen gas is preferable.

Examples of the oxygen-containing gas supplied to the secondary treatment section 15 include air and oxygen gas. From the viewpoint of economic efficiency, air is preferable.

Examples of the inert gas for sealing supplied into the entrance-side seal chamber 12 and the exit-side seal chamber 18 include nitrogen gas, argon gas, helium gas, xenon gas, carbon dioxide gas, and superheated steam. From the viewpoint of economic efficiency, nitrogen gas is preferable. In addition, it is preferable that the inert gas is heated from the viewpoint of reducing the amount of gas used due to volume expansion.

By driving an exhaust fan (not shown), outside air flowing in from the entrance 11a of the heating furnace 20 is constantly exhausted from the exhaust port 11b together with the inert gas and the pyrolysis gas from the entrance-side seal chamber 12. In order to suppress the inert gas and the pyrolysis gas in the heating furnace 20 from leaking to the outside, the amount of outside air flowing in from the entrance 11a of the heating furnace 20 may be adjusted using the opening degree adjustment plate.

In addition, outside air flowing in from the exit 19a of the heating furnace 20 is constantly exhausted from the exhaust port 19b together with the oxygen-containing gas and the oxidized gas from the exit-side seal chamber 18. In one example, in order to suppress the oxygen-containing gas and the oxidized gas in the heating furnace 20 from leaking to the outside, the amount of outside air flowing in from the exit 19a of the heating furnace 20 may be adjusted using the opening degree adjustment plate.

The opening degree of the exhaust port 11b and the opening degree of the exhaust port 19b may be adjusted as necessary.

The solar cell panel 1 is placed, on an upstream side of the heating furnace 20, on the endless belt 21 that moves from the upstream side of the heating furnace 20, passes through the inside of the heating furnace 20, and moves toward a downstream side of the heating furnace 20. The solar cell panel 1 is carried in through the entrance 11a of the heating furnace 20 by the endless belt 21 and is conveyed in the heating furnace 20.

In the entrance-side seal chamber 12, the solar cell panel 1 is conveyed while pushing up the seal curtain 22. The opening degree of the entrance of the entrance-side seal chamber 12 may be adjusted using the opening degree adjustment plate as necessary.

In the primary treatment section 13, the solar cell panel 1 is heat-treated in a non-oxidizing atmosphere while being conveyed. As a result, the resin of the encapsulant contained in the solar cell panel 1 is thermally decomposed to obtain the primary treated material 2. An oxygen concentration in the primary treatment section 13 is preferably 3.0% by volume or less, more preferably 1.0% by volume or less, and still more preferably 0.1% by volume or less from the viewpoint of suppressing formation of detonating gas.

An atmospheric temperature in the primary treatment section 13 is set to, for example, 300°C to 550°C, and a heating time is appropriately set in a range of, for example, 10 to 180 minutes according to a heating temperature. The heating temperature may be set in multiple stages. For example, a first stage may be set to 300°C to 400°C to decompose and vaporize acetate moieties of EVA, and then a second stage may be set to 400°C to 550°C to decompose and vaporize polyethylene moieties, which constitute a main chain of EVA. As a result, the decomposition and vaporization of EVA are promoted, and generation of residues such as carbides is suppressed.

In the switching section 14, the primary treated material 2 is conveyed from the primary treatment section 13 to the secondary treatment section 15 while pushing up the seal curtain 23.

In the secondary treatment section 15, the primary treated material 2 is heat-treated in an oxidizing atmosphere while being conveyed. As a result, the carbides of the resin such as the encapsulant remaining in the primary treated material 2 are oxidized, and consequently, the heat-treated material 3 is obtained. An oxygen concentration in the secondary treatment section 15 is preferably 80% by volume or less, more preferably 50% by volume or less, and still more preferably 25% by volume or less. In addition, from the viewpoint of promoting the oxidation of the carbides (soot) of the resin such as the encapsulant remaining in the primary treated material 2, the oxygen concentration in the secondary treatment section 15 is preferably 5% by volume or more, more preferably 10% by volume or more, and still more preferably 15% by volume or more.

An atmospheric temperature in the secondary treatment section 15 is set to, for example, 300°C to 500°C, and a heating time is appropriately set in a range of, for example, 10 to 180 minutes according to a heating temperature.

In the air-cooling chamber 16, the heat-treated material 3 is slowly cooled in order to prevent cracking of glass due to rapid cooling. Thereafter, in the cooling chamber 17 to which cooling water is supplied, the heat-treated material 3 is cooled to a temperature that can be handled by an operator, for example, 100°C or lower.

In the exit-side seal chamber 18, the heat-treated material 3 is conveyed while pushing up the seal curtain 24. As necessary, the opening degree of the exit of the exit-side seal chamber 18 may be adjusted using the opening degree adjustment plate.

The heat-treated material 3 conveyed in the heating furnace 20 by the endless belt 21 is carried out from the exit 19a of the heating furnace 20. The heat-treated material 3 carried out from the heating furnace 20 mainly includes a cell, a glass substrate, or the like. Although a small amount of soot may adhere to the heat-treated material 3, the amount thereof is reduced to, for example, 100 ppm or less.

### (Mechanism of Action)

In the continuous heating device 100 described above, since the heating furnace 20 that performs the heat treatment on the solar cell panel 1 while conveying the solar cell panel 1 to obtain the heat-treated material 3 is provided, the heat-treated material 3 can be obtained by continuously heat-treating the solar cell panel 1. Therefore, compared to a batch treatment, a throughput per unit time can be increased.

The primary treatment section 13 and the secondary treatment section 15 use thermal energy generated by the combustion of the pyrolysis gas generated when the encapsulant of the solar cell panel 1 is heat-treated and decomposed in the primary treatment section 13.

In particular, the pyrolysis gas generated in the primary treatment section 13 contains a larger amount of combustible gas than the oxidized gas generated in the secondary treatment section 15. According to the continuous heating device 100, the thermal energy generated by the combustion of the pyrolysis gas generated in the primary treatment section 13 containing a larger amount of combustible gas can be used to assist the heating of the primary treatment section 13 and the secondary treatment section 15.

More specifically, the pyrolysis gas generated when the encapsulant of the solar cell panel is heat-treated and decomposed in the primary treatment section 13 is converted into a high-temperature exhaust gas generated by the combustion reaction in the combustion chamber 40, and then the thermal energy is used in each of the first heat exchanger 31 and the second heat exchanger 32.

According to the continuous heating device 100 having the characteristic configuration described above, since the thermal energy generated by the combustion of the pyrolysis gas can be used for the heat treatments in the primary treatment section 13 and the secondary treatment section 15, the thermal efficiency in the heat treatment of the solar cell panel is improved, and the energy cost for heating the primary treatment section 13 and the secondary treatment section 15 can be reduced.

In addition, according to the present embodiment, since the thermal efficiency in the heat treatment of the solar cell panel is improved, the amount of soot derived from the resin residue can be reduced.

In one example, the amount of soot adhering to the heat-treated material can be reduced to 100 ppm or less. The amount of soot adhering to the heat-treated material is preferably 70 ppm or less, more preferably 50 ppm or less, and still more preferably 10 ppm or less. A lower limit of the amount of soot adhering to the heat-treated material is not particularly limited, and may be, for example, 0.1 ppm or 1 ppm.

In the continuous heating device 100 according to the example shown in FIG. 1, both the primary treatment section 13 and the secondary treatment section 15 use the thermal energy generated by the combustion of the pyrolysis gas generated when the resin of the solar cell panel 1 is heat-treated and decomposed in the primary treatment section 13. However, in a continuous heating device according to another example, any one of the primary treatment section 13 and the secondary treatment section 15 may use the thermal energy generated by the combustion of the pyrolysis gas generated when the resin of the solar cell panel 1 is heat-treated and decomposed in the primary treatment section 13.

Meanwhile, in the continuous heating device 100, the seal curtain 22 that extends across the conveyance direction of the solar cell panel 1 and hangs down to a length contacting the endless belt 21 is suspended in the entrance-side seal chamber 12 upstream of the primary treatment section 13 that heats the solar cell panel 1.
Therefore, outside air that has infiltrated into the entrance-side seal chamber 12 and the inert gas and the pyrolysis gas from the primary treatment section 13 are less likely to pass through the entrance-side seal chamber 12. In addition, the seal curtain 24 that extends across the conveyance direction of the heat-treated material 3 and hangs down to a length contacting the endless belt 21 is also suspended in the exit-side seal chamber 18 downstream of the secondary treatment section 15. Therefore, outside air that has infiltrated into the exit-side seal chamber 18 and the oxygen-containing gas and the oxidized gas from the primary treatment section 13 or the cooling chamber 17 are less likely to pass through the exit-side seal chamber 18.

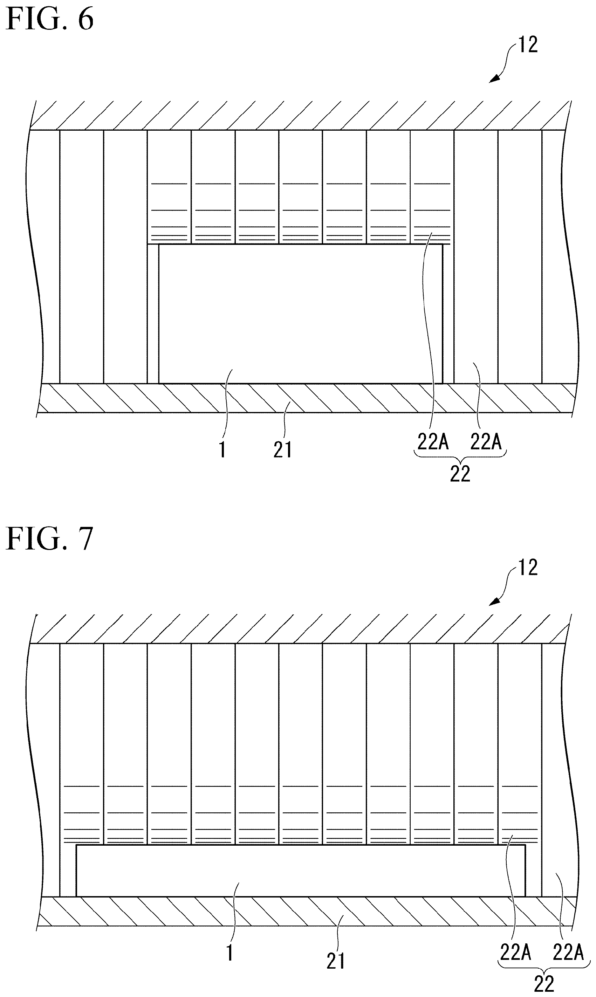

The seal curtain 22 in the entrance-side seal chamber 12 has flexibility. Therefore, as shown in FIG. 5, when the solar cell panel 1 passes through the entrance-side seal chamber 12, the seal curtain 22 is pushed up in a bent state. At this time, the seal curtain 22 is pressed against the solar cell panel 1, and as shown in FIGS. 6 and 7, the seal curtain 22 is in close contact with a surface of the solar cell panel 1 while conforming to a thickness and an upper surface shape of the solar cell panel 1. Therefore, a gap between the seal curtain 22 and the upper surface of the solar cell panel 1 is minimized. Therefore, outside air that has infiltrated into the entrance-side seal chamber 12 and the inert gas and the pyrolysis gas from the primary treatment section 13 are less likely to pass through the entrance-side seal chamber 12 even when the solar cell panel 1 passes through the entrance-side seal chamber 12.

The seal curtain 23 in the switching section 14 also has flexibility. Therefore, for the same reason as the seal curtain 22, a gap between the seal curtain 23 and the primary treated material 2 is minimized. Therefore, the inert gas and the pyrolysis gas from the primary treatment section 13 that have infiltrated into the switching section 14 are less likely to pass through the switching section 14 and enter the secondary treatment section 15 even when the primary treated material 2 passes through the switching section 14. In addition, the oxygen-containing gas and the pyrolysis gas from the secondary treatment section 15 that have infiltrated into the switching section 14 are also less likely to pass through the switching section 14 and enter the primary treatment section 13 even when the primary treated material 2 passes through the switching section 14.

The seal curtain 24 in the exit-side seal chamber 18 also has flexibility. Therefore, for the same reason as the seal curtain 22, a gap between the seal curtain 24 and the heat-treated material 3 is minimized. Therefore, outside air that has infiltrated into the exit-side seal chamber 18 and the oxygen-containing gas and the oxidized gas from the secondary treatment section 15 and the cooling chamber 17 are less likely to pass through the exit-side seal chamber 18 even when the heat-treated material 3 passes through the exit-side seal chamber 18.

As described above, in the continuous heating device 100, the infiltration of the outside air into the primary treatment section 13 and the secondary treatment section 15 is suppressed. Therefore, the oxygen concentration in the primary treatment section 13 is less likely to rise excessively. In addition, the solar cell panel 1 can be continuously heat-treated to obtain the heat-treated material 3 while maintaining the non-oxidizing atmosphere in the primary treatment section 13. As a result, the formation of detonating gas is suppressed. In addition, the leakage of the inert gas or the pyrolysis gas in the heating furnace 20 to the outside is suppressed.

In the continuous heating device 100 described above, since the plurality of stages of the seal curtain 22 are suspended in the entrance-side seal chamber 12 at intervals in the conveyance direction of the solar cell panel 1, outside air that has infiltrated into the entrance-side seal chamber 12 and the inert gas and the pyrolysis gas from the primary treatment section 13 are even less likely to pass through the entrance-side seal chamber 12. In addition, since the plurality of stages of the seal curtain 24 are suspended in the exit-side seal chamber 18 at intervals in the conveyance direction of the heat-treated material 3, outside air that has infiltrated into the exit-side seal chamber 18 and the oxygen-containing gas and the oxidized gas from the secondary treatment section 15 and the cooling chamber 17 are even less likely to pass through the exit-side seal chamber 18. Therefore, the infiltration of the outside air into the primary treatment section 13 and the secondary treatment section 15 and the leakage of the oxygen-containing gas and the oxidized gas from the inside of the heating furnace 20 are sufficiently suppressed.

In the continuous heating device 100 described above, the seal curtain 22 in the entrance-side seal chamber 12 is formed of a plurality of strip members 22A arranged without gaps in a direction extending across the conveyance direction of the solar cell panel 1, that is, the seal curtain 22 is finely divided. Therefore, as shown in FIGS. 6 and 7, only the minimum number of strip members 22A are pushed up according to the width of the solar cell panel 1 in the direction extending across the conveyance direction of the solar cell panel 1. Therefore, a difference between a total width of the strip members 22A pushed up by the solar cell panel 1 and the width of the solar cell panel 1 can be made as small as possible, and the gap between the side surface of the solar cell panel 1 and the strip member 22A, which is formed on both sides of the solar cell panel 1 in the direction extending across the conveyance direction of the solar cell panel 1, can be made as small as possible. Therefore, outside air that has infiltrated into the entrance-side seal chamber 12 and the inert gas and the pyrolysis gas from the primary treatment section 13 are even less likely to pass through the entrance-side seal chamber 12. In addition, the seal curtain 24 in the exit-side seal chamber 18 is also formed of a plurality of strip members (not shown) arranged without gaps in a direction extending across the conveyance direction of the heat-treated material 3. Therefore, for the same reason as the seal curtain 22, outside air that has infiltrated into the exit-side seal chamber 18 and the oxygen-containing gas and the oxidized gas from the secondary treatment section 15 and the cooling chamber 17 are even less likely to pass through the exit-side seal chamber 18. Therefore, the infiltration of the outside air into the primary treatment section 13 and the leakage of the oxygen-containing gas and the oxidized gas from the heating furnace 20 are sufficiently suppressed.

### [Recovery System for Constituent Member of Solar Cell Panel]

A recovery system for a constituent member of a solar cell panel includes a continuous heating device and a sorting device that sorts a glass material and a valuable metal-containing material from a heat-treated material acquired by the continuous heating device. The details and preferred aspects of the continuous heating device are as described above. Hereinafter, an embodiment of the sorting device will be described in detail.

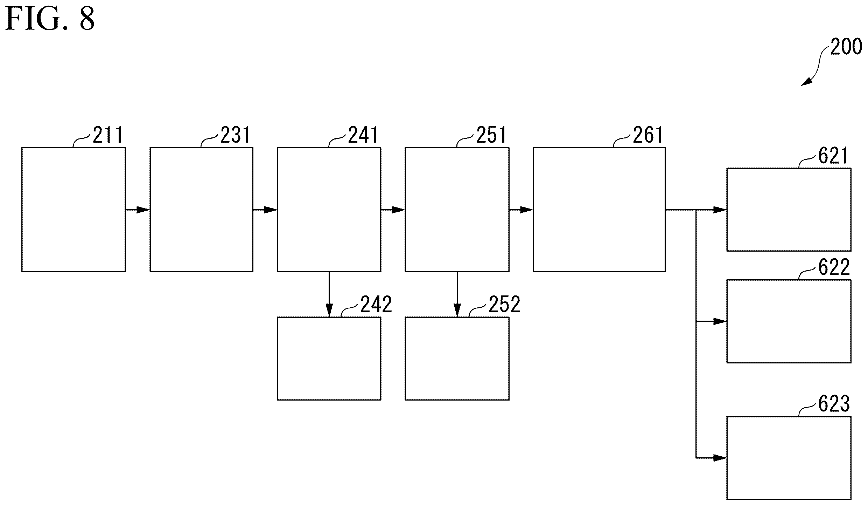

FIG. 8 is a schematic diagram showing an example of the recovery system for a constituent member of a solar cell panel. A recovery system 200 includes a disassembly processing unit 211, a heat treatment unit 231, a screening processing unit 241, a screening recovery unit 242, an air sorting unit 251, a light-product recovery unit 252, an air table sorting unit 261, a discharged-product recovery unit 621, a retained-product recovery unit 622, and a glass recovery unit 623.

The disassembly processing unit 211 performs pretreatment such as disassembly of an aluminum frame of the solar cell panel and removal of a back sheet, a terminal box, and a cable. The disassembly processing unit 211 can first remove the aluminum frame, the back sheet, the terminal box, and the cable from the solar cell panel as necessary. Thereafter, an inner structure of the solar cell panel is sequentially processed.

The glass of the glass substrate of the solar cell panel is preferably tempered glass. This is because the glass can be recovered as fine granular glass after the heat treatment and can be easily processed by the sorting device. In addition, the glass of the solar cell panel before the heat treatment may be broken.

The heat treatment unit 231 performs a heat treatment using the continuous heating device according to the present invention to produce a heat-treated material. By performing the heat treatment using the continuous heating device according to the present invention, the resin of the encapsulant of the solar cell panel can be removed.

In a case where the continuous heating device 100 is used, in the heat treatment unit 231, the primary treatment by the primary treatment section 13 and the secondary treatment by the secondary treatment section 15 are sequentially performed.

The details and preferred aspects of the primary treatment and the secondary treatment are as described above.

The screening processing unit 241 screens the heat-treated material obtained by the continuous heating device into a first valuable metal-containing material containing cells and copper wires, and a first glass material.

By the screening performed by the screening processing unit 241, oversize material and undersize material can be separated. The oversize material is recovered by the screening recovery unit 242. The oversize material contains the first valuable metal-containing material containing cells and copper wires. Examples of the oversize material include a linear material such as a copper wire, a relatively large material such as a cell, and a material in which these are entangled.

The undersize material is processed by the subsequent air sorting unit 251. The undersize material may be crushed as necessary and then processed by the air sorting unit 251. The undersize material contains the first glass material.

The screening processing unit 241 has a screen. The screen of the screening processing unit 241 may be a single-stage screen or a multi-stage screen.

An opening size of the screen of the screening processing unit 241 is preferably 1 to 100 mm. In the case of a multi-stage screen, the screening may be performed while gradually changing the opening size of the screen.

For example, a first screening unit using a first screen having a large opening size such as 5 mm or more, 8 mm or more, 10 mm or more, 15 mm or more, or 20 mm or more, and a second screening unit using a second screen having an opening size smaller than the first screen such as 15 mm or less, 10 mm or less, 8 mm or less, 5 mm or less, or 3 mm or less may be used. A difference in opening size between the first screen and the second screen may be 1 mm or more, 3 mm or more, 5 mm or more, or the like.

An upper limit of the opening size of the screen may be 80 mm or less or 60 mm or less. A shape of an opening portion of the screen used for the screening may be circular or polygonal. A screen sorting machine may also be used.

The air sorting unit 251 sorts the first glass material screened by the screening processing unit 241 into a second valuable metal-containing material containing cells and a second glass material by air sorting. The second valuable metal-containing material containing cells is recovered as a light product in the light-product recovery unit 252. The second glass material is processed as a heavy product in the subsequent air table sorting unit 261.

Air sorting is one of specific gravity separation technologies. Specific gravity separation is a sorting technology for separating a target substance from other substances by using a difference in specific gravity. As an air sorting device, a vertical air separator, a zigzag separator, a horizontal flow-type separator, an inertial force linear separator, an inertial force curved-type separator, or the like can be used.

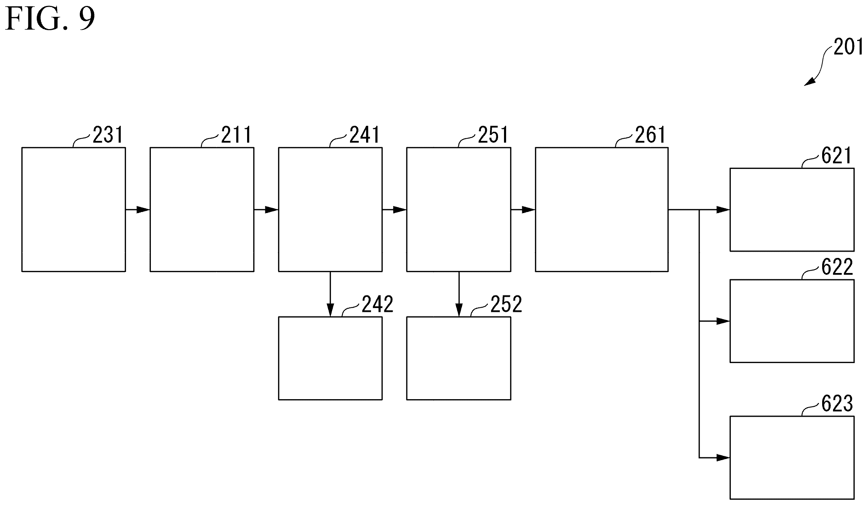

For example, a vertical air separator as shown in FIG. 9 of Japanese Unexamined Patent Application No. 2023-89446 may be used. According to the vertical air separator, an upward flow is blown from below into a vertically elongated column, whereby low-specific-gravity particles having a low settling velocity can be moved upward and recovered as a light product, and high-specific-gravity particles having a high settling velocity can be moved downward and recovered as a heavy product.

The light product in the air sorting is the cell or the like of the solar cell panel. The heavy product in the air sorting is a concentrate of coarse glass of the solar cell panel or the like. Glass of isotropic particles derived from cover glass or the like is likely to have small particles distributed to the light product. On the other hand, since the cell is a flat particle and is considered to easily receive an air flow over a wide area, larger particles are more likely to be distributed to the light product. Since larger particles are more easily classified into the light product and the heavy product, there is little need to excessively perform crushing before the air sorting. Metals can be recycled by refining the second valuable metal-containing material containing the cells of the light product.

A wind speed in the air sorting can be, for example, 4 to 15 m/s, and an air flow rate can be 20 to 70 L/min. Examples of a device suitable for the air sorting include an air separator L750SRM manufactured by Harada Sangyo Co., Ltd..

The air table sorting unit 261 sorts a third glass material from the second glass material of the heavy product obtained by the air sorting unit 251 using an air table. The air table sorting unit 261 can separate the second glass material into (i) the third glass material containing high-purity glass, (ii) a retained light product such as a middling product containing low-purity glass and copper wire-derived materials, and (iii) a discharged light product including copper wire-derived materials and cell-derived material.

The valuable metal-containing material is recovered by the discharged-product recovery unit 621 and the retained-product recovery unit 622, respectively, by the air table sorting unit 261. In addition, the third glass material is recovered by the glass recovery unit 623.

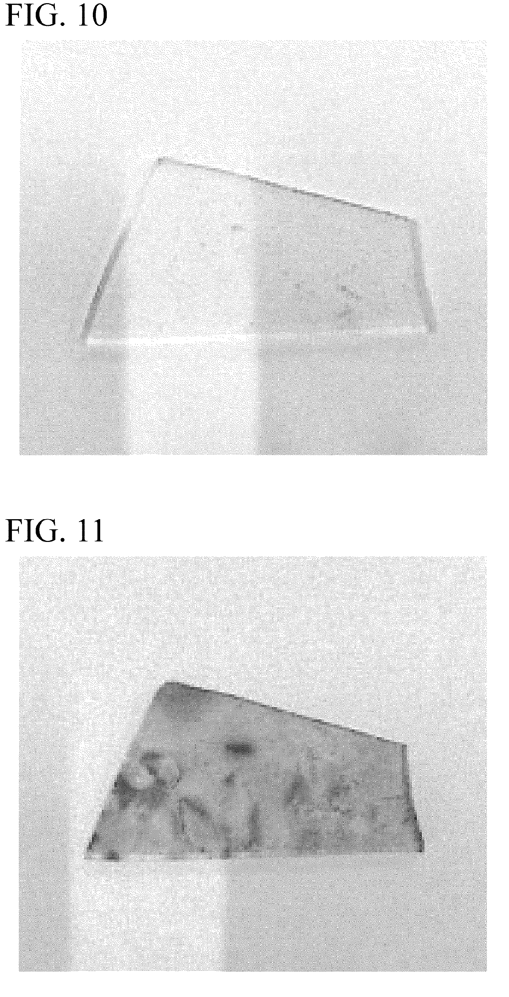

In the air table sorting unit 261, for example, a uniaxial air table separator as shown in FIG. 10 of Patent Document 1 may be used. According to this air table separator, vibration can be applied to a deck inclined slightly from a horizontal direction, and air can be blown to the deck from below in a direction perpendicular to the deck. High-specific-gravity particles move downward in a powder layer without being greatly affected by wind, and concentrate near ridges of a deck surface. While the downward movement is suppressed by the ridges, the high-specific-gravity particles move upward on the deck due to the vibration of the deck, and are recovered as a heavy product. On the other hand, low-specific-gravity particles move upward in the powder layer due to the influence of the wind, move downward along the inclination of the deck, and are recovered as a light product.

The air table sorting enables classification into a plurality of types, such as materials discharged from a discharge port of the air table and materials retained on the air table. Taking the air table of FIG. 10 of Patent Document 1 as an example, a light product mainly containing copper wires and cells is discharged from below a deck. In addition, a heavy product mainly containing glass is discharged from an upper side of the deck. In addition, materials that are less likely to move to any of the light product and the heavy product during an operation of the air table may be recovered as retained materials retained on the deck of the air table. In the retained materials, light products such as copper wires are separated on an upper side of a powder layer.

Examples of the air table include an air table SRM 296P-72N type manufactured by Harada Sangyo Co., Ltd.. In order to separate the light product, the heavy product, and the like with higher accuracy, further sorting methods such as air sorting, air table sorting, or screening may be used.

According to the recovery system for a constituent member of a solar cell panel of the present invention, a glass purity of the third glass material after sorting can be 99.99% or more. The glass purity of the third glass material after sorting is preferably 99.995% or more, more preferably 99.999% or more, and still more preferably 99.9995% or more. An upper limit of the glass purity of the third glass material after sorting is not particularly limited, and may be, for example, 99.9999% or 99.9998%.

A recycling rate of the glass material contained in the heat-treated material is preferably 85% or more, more preferably 90% or more, and still more preferably 93% or more.

The recycling rate of the glass material contained in the heat-treated material is calculated from the following expression. 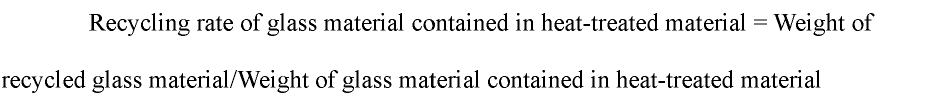 Recycling rate of glass material contained in heat-treated material = Weight of recycled glass material/Weight of glass material contained in heat-treated material

The copper wire contained in the heat-treated material can be recycled through metal refining of the first valuable metal-containing material. A recycling rate of the copper wire is preferably 90% or more, more preferably 95% or more, and still more preferably 99% or more.

The recycling rate of the copper wire contained in the heat-treated material is calculated from the following expression. 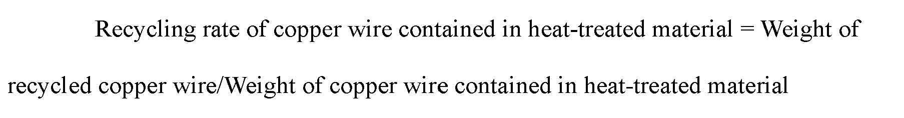 Recycling rate of copper wire contained in heat-treated material = Weight of recycled copper wire/Weight of copper wire contained in heat-treated material

The cell contained in the heat-treated material can be recycled through the metal refining of the first valuable metal-containing material and metal refining of the second valuable metal-containing material. A recycling rate of the cell is preferably 90% or more, more preferably 95% or more, and still more preferably 99% or more. The recycling rate of the cell contained in the heat-treated material is calculated from the following expression. 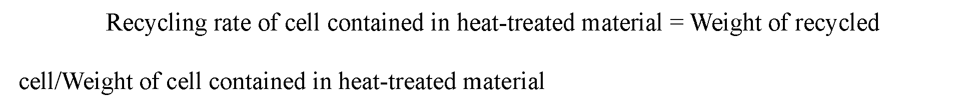 Recycling rate of cell contained in heat-treated material = Weight of recycled cell/Weight of cell contained in heat-treated material

Although several embodiments have been described above, the present invention is not limited to the embodiments disclosed in the present specification, and can be implemented with appropriate modifications without changing the gist of the present invention. The embodiments disclosed in the present specification can be implemented in various other forms, and various omissions, substitutions, and changes can be made without departing from the gist of the invention.

For example, FIG. 9 is a schematic diagram showing another example of the recovery system for a constituent member of a solar cell panel. A recovery system 201 is a modification example of the recovery system 200 shown in FIG. 8. As in the recovery system 201, the order of the disassembly processing unit 211 and the heat treatment unit 231 may be reversed. That is, disassembly processing may be performed after the heat treatment is performed using the continuous heating device of the present invention. A resin such as a back sheet and a terminal box is removed by the heat treatment.

### Examples

Hereinafter, the embodiments will be described in more detail with reference to Examples, but the present invention is not limited to the following description.

### [Example 1]

A solar cell panel was treated using the continuous heating device 100 to obtain a heat-treated material. Thereafter, an aluminum frame was removed. In the primary treatment, the solar cell panel was heated in a nitrogen gas atmosphere for 7 minutes at a temperature rising from room temperature to 500°C and for 16 minutes at a temperature of 500°C. The oxygen concentration in the primary treatment section 13 was controlled to 3% by volume. In the secondary treatment, the solar cell panel was heated at a temperature of 500°C for 16 minutes in an oxidizing atmosphere. The oxygen concentration in the secondary treatment section 15 was controlled to 21% by volume.

Subsequently, using the recovery system 200 shown in FIG. 8, 273.6 kg of the heat-treated material (3.4 kg of copper wires, 13 kg of cells, and 255.5 kg of glass material) was subjected to sorting. As a result of the sorting, 17 kg of the first valuable metal-containing material (the remainder being glass) containing 62.6% of copper wires and cells, 14.7 kg of the second valuable metal-containing material (the remainder being glass) containing 39.3% of cells, and 239.5 kg of the third glass material (the remainder being cells) having a purity of 99.9997% were recovered. The recycling rates were 100% for the copper wires, 99.5% for the cells, and 93.7% for the glass material, respectively.

### [Comparative Example 1]

A solar cell panel was heat-treated in the continuous heating device 100 under the same conditions as in Example 1, except that the heat treatment was performed only by the primary treatment section 13 without operating the secondary treatment section 15.

As shown by comparison between FIGS. 10 and 11, the amount of soot adhering to glass fragments was reduced in Example 1 as compared with Comparative Example 1.

### INDUSTRIAL APPLICABILITY

According to the present invention, thermal efficiency in a heat treatment of a solar cell panel is improved, energy cost can be reduced, and quality of valuable materials recovered from the solar cell panel is also improved.

### REFERENCE SIGNS LIST

1 Solar cell panel
2 Primary treated material
3 Heat-treated material
13 Primary treatment section
14 Switching section
15 Secondary treatment section
20 Heating furnace
21 Endless belt

## Claims

1. A continuous heating device comprising:
a heating furnace configured to perform a heat treatment on a solar cell panel while conveying the solar cell panel with an endless belt to obtain a heat-treated material,
wherein the heating furnace includes a primary treatment section configured to perform a heat treatment on the solar cell panel in a non-oxidizing atmosphere while conveying the solar cell panel with the endless belt to obtain a primary treated material, and a secondary treatment section configured to perform a heat treatment on the primary treated material in an oxidizing atmosphere while conveying the primary treated material with the endless belt to obtain the heat-treated material, and
at least one of the primary treatment section and the secondary treatment section uses thermal energy generated by combustion of a pyrolysis gas generated when an encapsulant of the solar cell panel is heat-treated and decomposed in the primary treatment section.

2. The continuous heating device according to Claim 1,
wherein a flexible seal curtain that extends across a conveyance direction of the solar cell panel and that is in contact with the endless belt is suspended at at least one or more locations in the heating furnace.

3. The continuous heating device according to Claim 2,
wherein the seal curtain is suspended in the heating furnace between the primary treatment section and the secondary treatment section.

4. The continuous heating device according to Claim 2,
wherein the seal curtain is suspended in the heating furnace upstream of the primary treatment section.

5. The continuous heating device according to Claim 2,
wherein the seal curtain is suspended in the heating furnace downstream of the secondary treatment section.

6. The continuous heating device according to Claim 1,
wherein at least one of the primary treatment section and the secondary treatment section uses thermal energy of an exhaust gas generated after the combustion of the pyrolysis gas.

7. The continuous heating device according to Claim 1, further comprising:
a combustion chamber configured to combust the pyrolysis gas generated when the encapsulant of the solar cell panel is heat-treated and decomposed in the primary treatment section.

8. The continuous heating device according to Claim 7,
wherein at least one of the primary treatment section and the secondary treatment section uses thermal energy of an exhaust gas discharged from the combustion chamber.

9. The continuous heating device according to Claim 1,
wherein a heat exchanger configured to use the thermal energy generated by the combustion of the pyrolysis gas is disposed in at least one of the primary treatment section and the secondary treatment section.

10. The continuous heating device according to Claim 9,
wherein the heat exchanger uses thermal energy of an exhaust gas generated after the combustion of the pyrolysis gas.

11. The continuous heating device according to Claim 9,
wherein the heating furnace includes a muffle surrounding the endless belt to cover the endless belt, and an outer wall surrounding the muffle to cover the muffle, and
the heat exchanger is disposed in a space between the muffle and the outer wall.

12. The continuous heating device according to Claim 9,
wherein the heat exchanger is an indirect heat exchanger.

13. The continuous heating device according to Claim 11,
wherein an electric heater is disposed in the space between the muffle and the outer wall.

14. The continuous heating device according to Claim 1,
wherein an amount of soot adhering to the heat-treated material is 100 ppm or less.

15. A recovery system for a constituent member of a solar cell panel, the recovery system comprising:
the continuous heating device according to any one of Claims 1 to 14; and
a sorting device configured to sort a glass material and a valuable metal-containing material from the heat-treated material.

16. The recovery system for a constituent member of a solar cell panel according to Claim 15,
wherein the sorting device includes a screening processing unit configured to screen the heat-treated material into a first valuable metal-containing material containing a cell and a copper wire, and a first glass material.

17. The recovery system for a constituent member of a solar cell panel according to Claim 16,
wherein the sorting device further includes an air sorting unit configured to sort, by air sorting, the first glass material screened by the screening processing unit into a second valuable metal-containing material containing a cell, and a second glass material.

18. The recovery system for a constituent member of a solar cell panel according to Claim 17, further comprising:
an air table sorting unit configured to sort a third glass material from the second glass material using an air table.

19. The recovery system for a constituent member of a solar cell panel according to Claim 18,
wherein a glass purity of the third glass material after sorting is 99.99% or more.

20. The recovery system for a constituent member of a solar cell panel according to Claim 15,
wherein a recycling rate of the glass material contained in the heat-treated material is 85% or more.

21. The recovery system for a constituent member of a solar cell panel according to Claim 15,
wherein a recycling rate of a cell contained in the heat-treated material is 90% or more.

22. The recovery system for a constituent member of a solar cell panel according to Claim 15,
wherein a recycling rate of a copper wire contained in the heat-treated material is 90% or more.
